# EUROPÄISCHE PATENTANMELDUNG

(11) **EP 4 756 155 A1**
(43) Veröffentlichungstag der Anmeldung: **10.06.2026**
(21) Anmeldenummer: 24217559.4
(22) Anmeldetag: 04.12.2024
(51) Int. Cl.: E04H 17/26, A01K 3/00

(54) **WEIDEZAUNHANDHABUNGSSYSTEM, VORRICHTUNG ZUM AB- UND/ODER AUFROLLEN VON ZAUNDRÄHTEN UND ZAUNPFOSTEN FÜR SELBIGES**

(71) Anmelder: Gallagher Europe B.V., 9723 AZ Groningen (NL)
(72) Erfinder: DIJKSTRA, Herrn Dooitze Frederik, 9774TH Adorp (NL)
(74) Vertreter: Eisenführ Speiser

(57) **Zusammenfassung**

Ein Weidezaunhandhabungssystem zur Montage auf einem Fahrzeug. Es wird vorgeschlagen, dass das Fahrzeug einen Fahrerabschnitt aufweist, der in Fahrtrichtung zwischen einem Vorderabschnitt des Fahrzeugs und einem Heckabschnitt des Fahrzeugs angeordnet ist und einen seitlichen Zugangsabschnitt aufweist, mit einer Vorrichtung zum fahrzeuggestützten Abrollen einer Anzahl von individuellen Zaundrähten, insbesondere von elektrischen Drähten eines Weidezauns, und/oder einer Vorrichtung zum fahrzeuggestützten Aufrollen einer Anzahl von Zaundrähten, insbesondere von elektrischen Drähten eines Weidezauns; wobei die jeweilige Vorrichtung eine Montageschnittstelle zur Befestigung der Vorrichtung auf dem Fahrzeug aufweist, und eine Anzahl Haspelaufnahmen für jeweils mindestens eine Zaundrahthaspel aufweist, wobei die Haspelaufnahmen derart positioniert sind, dass der Zaundraht seitlich entlang des Fahrzeugs von dem Vorderabschnitt aus an dem Zugangsabschnitt vorbeigeführt wird, wenn das Fahrzeug fährt, um ein manuelles Handhaben eines oder mehrerer Zaunpfosten, insbesondere Verbinden mit und/oder Separieren von der Anzahl Zaundrähte, durch den Zugangsabschnitt hindurch zu ermöglichen.

## Beschreibung

Die Erfindung betrifft ein Weidezaunhandhabungssystem zur Montage auf einem Fahrzeug. Die Erfindung betrifft ferner ein Fahrzeug zur Weidezaunhandhabung mit einem solchen System, sowie Vorrichtungen zum fahrzeuggestützten Abrollen und/oder Aufrollen von Zaundrähten für ein solches System. Die Erfindung betrifft ferner einen Zaunpfosten für einen Weidezaun, zur Handhabung in einem solchen System.

Weidezäune werden in der Landwirtschaft benutzt, um Areale einzuzäunen, innerhalb derer Weidetiere sich aufhalten können. Die Weidezäune dienen zum einen dazu, zu verhindern, dass die Weidetiere sich von den designierten Weideflächen entfernen, und auch dazu, die Weidetiere zu schützen. Es soll mit Weidezäunen in dieser Hinsicht vor allem verhindert werden, dass Wildtiere und gegebenenfalls auch Personen sich unberechtigten Zutritt zur abgesperrten Weidefläche verschaffen und die Tiere verletzen oder aus dem Bestand entfernen.

Sofern Weideflächen langfristig verwendet werden sollen, werden üblicherweise permanente Weidezaunanlagen errichtet. Dies kommt insbesondere dann in Betracht, wenn die Nutzung der Fläche sich auf ganzjährige oder mehrjährige Nutzungen ausdehnen soll.

Es gibt allerdings neben den permanenten Zäunen auch Situationen, in denen Weideflächen in kürzeren Zeiträumen verändert oder verlagert werden, beispielsweise wenn die Weidetiere die Weidefläche häufiger wechseln müssen. Hierzu zählen etwa Schafsweiden. Für solche Zwecke werden temporäre Weidezaunanlagen benötigt, die möglichst einfach zu errichten und wieder entfernbar sein sollen. Solche mobilen Weidezaunanlagen werden auch benutzt, wenn die Weidefläche nur schwer zu erreichen ist, etwa in Bergregionen, und/oder wenn die Weidefläche nicht oder nur schwer befahrbar ist, beispielsweise bei hoher Feuchtigkeit.

Es ist allgemein bekannt, Zaundraht in Haspelaufnahmen auf einen Anhänger zu verbringen, und diesen Anhänger dann an ein Zugfahrzeug zu hängen, welches über die designierte Weidefläche gefahren wird. Eine erste Person fährt hier das Fahrzeug, während eine zweite Person hinter dem Fahrzeug und hinter dem Anhänger herläuft und diesen bedient, während das Fahrzeug den Draht zum Abwickeln entlang der Weidefläche auslegt. Hierfür ist ein vergleichsweise hoher Zeitaufwand und personeller Einsatz erforderlich, was in landwirtschaftlichen Betrieben angesichts der wirtschaftlichen Anforderungen zunehmend als Nachteil angesehen wird.

Es lag der Erfindung demzufolge die Aufgabe zugrunde, ein Weidezaunhandhabungssystem anzugeben, welches die vorstehend beschriebenen Nachteile möglichst weitgehend überwindet. Der Erfindung lag insbesondere die Aufgabe zugrunde, ein Weidezaunhandhabungssystem anzugeben, welches eine zeit- und arbeitseffiziente Errichtung und Entfernung des Weidezauns auf, beziehungsweise von Weideflächen ermöglicht und eine möglichst hohe Flexibilität bietet.

Die Erfindung löst die ihr zugrundeliegende Aufgabe in einem ersten Aspekt, indem sie ein Weidezaunhandhabungssystem vorschlägt zur Montage auf einem Fahrzeug, wobei das Fahrzeug einen Fahrerabschnitt aufweist, der in Fahrtrichtung zwischen einem Vorderabschnitt des Fahrzeugs und einem Heckabschnitt des Fahrzeugs angeordnet ist, und einen seitlichen Zugangsabschnitt aufweist, mit
- einer Vorrichtung zum fahrzeuggestützten Abrollen einer Anzahl von individuellen Zaundrähten, insbesondere von elektrischen Drähten eines Weidezauns, und/oder
- einer Vorrichtung zum fahrzeuggestützten Aufrollen einer Anzahl von Zaundrähten, insbesondere von elektrischen Drähten eines Weidezauns;
wobei die jeweilige Vorrichtung
- eine Montageschnittstelle zur Befestigung der Vorrichtung auf dem Fahrzeug aufweist, und
- eine Anzahl Haspelaufnahmen für jeweils mindestens eine Zaundrahthaspel aufweist, wobei die Haspelaufnahmen derart positioniert sind, dass der Zaundraht seitlich entlang des Fahrzeugs von dem Vorderabschnitt aus an dem Zugangsabschnitt vorbeigeführt wird, wenn das Fahrzeug fährt, um ein manuelles Handhaben eines oder mehrerer Zaunpfosten, insbesondere Verbinden mit und/oder Separieren von der Anzahl Zaundrähte, durch den Zugangsabschnitt hindurch zu ermöglichen.

Die Erfindung beruht gemäß dem ersten Aspekt auf der Erkenntnis, dass eine signifikante Zeitersparnis beim Handhaben des Zaundrahtes dadurch realisiert werden kann, dass der Fahrer vom Fahrerabschnitt aus durch den Zugangsabschnitt aus direkt an den Zaundraht gelangen kann, welcher gerade ab-, beziehungswiese aufgerollt wird. Es ist dem Fahrer durch das seitliche Vorbeiführen des Zaundrahts am Zugangsabschnitt möglich, die jeweiligen Zaunpfosten direkt, ohne Ab- oder Aussteigen, an den Zaundrähten zu befestigen oder von den Zaundrähten zu lösen. Es kann sinnvoll sein, zum Verankern des Zaunpfostens im Boden das Fahrzeug temporär zu stoppen, aber ein Entfernen des Bedieners vom Fahrzeug ist nicht notwendig. Es ist gemäß der Erfindung durch die Montage der Abroll- und/oder Aufrollvorrichtungen auf dem Fahrzeug selbst nicht mehr nötig, dass mehrere Personen für das Errichten oder Abbauen des Zaunes tätig werden müssen. Der Fahrer des Fahrzeugs kann dies alleine bewältigen. Indem die Vorrichtung zum fahrzeuggestützten Abrollen der Zaundrähte im Vorderabschnitt des Fahrzeugs montiert wird, und die Vorrichtung zum fahrzeuggestützten Aufrollen der Zaundrähte im Heckabschnitt, kann das Fahrzeug jeweils in Vorwärtsrichtung bewegt werden, der Fahrer sieht also unmittelbar, wo er langfährt, während er den Zaun auf- beziehungsweise abbaut, was ein weiterer arbeitsergonomischer Vorteil ist.

Ein weiterer Vorteil der Erfindung wird darin gesehen, dass das Weidezaunhandhabungssystem grundsätzlich zur Montage auf jeder Art von Fahrzeug geeignet ist, welches einen Fahrerabschnitt mit seitlichem Zugangsabschnitt aufweist, der wahlweise rechts oder links sein kann, und an welchem im Vorderabschnitt und im Heckabschnitt eine Montageschnittstelle für das Weidezaunhandhabungssystem vorgesehen sein kann. Das trifft auf die meisten landwirtschaftlichen Fahrzeuge zu, aber auch auf Kleinfahrzeuge wie beispielsweise sogenannte All-Terrain-Vehicles (ATV), insbesondere Quads. Derartige Fahrzeuge sind leicht, klein und extrem geländegängig, sodass mit der Erfindung fahrzeuggestützt und mit einem einzigen Bediener auch auf sehr entlegenen oder von größeren Fahrzeugen nicht mehr befahrbaren Flächen der Weidezaun errichtet und abgebaut werden kann.

Damit eignet sich das Weidezaunhandhabungssystem insbesondere zum Einzäunen von Weideflächen für Schafe, die vor Wölfen geschützt werden müssen. Das Weidezaunhandhabungssystem eignet sich damit zur Verwendung von Schäfern, die in der betrieblichen Praxis häufig alleine für die Betreuung einer Schafsherde, oder sogar mehrerer Schafsherden zuständig sind.

Die Erfindung wird vorteilhaft weitergebildet, indem die Abrollvorrichtung eine Montageschnittstelle zur Befestigung der Vorrichtung an dem Vorderabschnitt des Fahrzeugs aufweist, und eine Anzahl Abrollhaspelaufnahmen für jeweils mindestens eine Zaundrahthaspel, wobei die Abrollhaspelaufnahmen derart positioniert sind, dass der Zaundraht seitlich entlang des Fahrzeugs von dem Vorderabschnitt aus an dem Zugangsabschnitt vorbeigeführt wird, wenn das Fahrzeug fährt, um ein manuelles Verbinden eines oder mehrerer Zaunpfosten mit der Anzahl Zaundrähte durch den Zugangsabschnitt hindurch zu ermöglichen.

In einer bevorzugten Ausführungsform weist die Abrollvorrichtung eine Anzahl von Umlenkpunkten auf, die eine Anzahl Abrollhaspelaufnahmen zugeordnet und derart positioniert sind, dass die Anzahl Zaundrähte in einer gemeinsamen Ebene, vorzugswiese vertikal, seitlich entlang des Fahrzeugs verlaufen. Die Umlenkpunkte können beispielsweise an vertikal verlaufenden Trägern angeordnet sein, die auf dem Fahrzeug mittels der Montageschnittstelle befestigt werden.

In einer weiteren bevorzugten Ausführungsform weist der Zaun eine Anzahl von Zaunpfosten auf, wobei der Zaunpfosten eine der Anzahl Drähte entsprechenden Anzahl Drahtösen aufweist, die zueinander einen ersten Abstand aufweisen, wobei die Abrollhaspelaufnahmen, insbesondere die den Abrollhaspelaufnahmen zugeordneten Umlenkpunkte, zueinander einen zweiten Abstand aufweisen, der gleich oder geringer ist als der erste Abstand.

Die Beabstandung der Umlenkpunkte im gleichen oder geringeren Abstand als die Abstände der Drahtösen am Zaunpfosten erleichtert das Einfädeln der geführten Zaundrähte in die Drahtösen des Zaunpfostens, weil der Zaunpfosten dann in leicht schräger Haltung zum gleichen Zeitpunkt an alle Zaundrähte angelegt und durch Aufstellen in die vertikale Ausrichtung Zaundrähte in einer Bewegung in die Drahtösen eingeführt werden können.

In einer bevorzugten Ausführungsform sind die Umlenkpunkte höhenverstellbar und/oder seitlich und/oder längs verstellbar an der Abrollvorrichtung angeordnet und vorzugsweise relativ zueinander höhenverstellbar.

In einerweiteren bevorzugten Ausführungsform weisen die Abrollhaspelaufnahmen jeweils eine Welle auf, auf welche die Zaundrahthaspeln aufgeschoben werden, wobei vorzugsweise im aufgeschobenen Zustand die Zaundrahthaspeln mit der Haspelaufnahme reibschlüssig in Eingriff stehen. Vorzugsweise sind die Wellen der Abrollhaspelaufnahmen vertikal ausgerichtet, sodass die Haspelaufnahmen von oben auf die Wellen aufgesteckt werden können. Die Wellen können auch als nichtrotierende Dorne ausgebildet sein, auf denen die Haspeln reibschlüssig lagern, da ein Antrieb der Wellen für den Abrollvorgang nicht erforderlich ist. Die Zaundrähte werden vorzugsweise ortsfest an einem ersten Zaunpfosten befestigt und die Haspeln rotieren dann automatisch bei einer Fahrt des Fahrzeugs während des Abrollvorgangs.

In einer weiteren bevorzugten Ausführungsform weist die Aufrollvorrichtung eine Montageschnittstelle zur Befestigung der Vorrichtung an dem Heckabschnitt des Fahrzeugs auf, und eine Anzahl Aufrollhaspelaufnahmen für jeweils mindestens eine Zaundrahthaspel, wobei die Haspelaufnahmen derart positioniert sind, dass der Zaundraht seitlich entlang des Fahrzeugs von dem Heckabschnitt aus an dem Zugangsabschnitt vorbeigeführt wird, wenn das Fahrzeug fährt, um ein manuelles Separieren eines oder mehrerer Zaunpfosten von der Anzahl Zaundrähte durch den Zugangsabschnitt hindurch zu ermöglichen.

Vorzugsweise weist die Aufrollvorrichtung einen Antriebsstrang auf, der dazu eingerichtet ist, antriebsseitig mit dem Fahrzeug verbunden zu werden und abtriebsseitig drehmomentübertragend mit den Aufrollhaspeln verbunden ist, und der dazu eingerichtet ist, die Aufrollhaspelaufnahmen zum Aufrollen des Zaundrahts drehend anzutreiben, wenn das Fahrzeug entlang des Zaunes bewegt wird. Hierdurch wird auf vorteilhafte Weise erreicht, dass die Haspeln immer dann mit Drehmoment versorgt werden, also gedreht werden, wenn das Fahrzeug fährt, und nicht angetrieben werden, wenn das Fahrzeug steht. Hierdurch wird es möglich, dass die Haspeln stets auf Zug den Draht einziehen, und ein störungsfreies Aufrollen der Zaundrähte während der Fahrt des Fahrzeugs stattfinden kann.

In einer bevorzugten Ausführungsform ist der Antriebsstrang dazu eingerichtet, drehmomentübertragend mit einer angetriebenen Achse des Fahrzeugs, und/oder einem angetriebenen Rad des Fahrzeugs verbunden zu werden. Der Antriebsstrang kann beispielsweise ein Mitnehmerrad aufweisen, welches gegen die Lauffläche eines der Räder des Fahrzeugs gesetzt wird, und ähnlich einer Zahnradpaarung immer dann in Drehung versetzt wird, wenn das Rad des Fahrzeugs sich dreht, etwa bei der Fahrt des Fahrzeugs.

Alternative Ausgestaltungen zum Versorgen des Antriebsstrangs mit Drehmoment wären der Anschluss an eine Drehmomentwelle oder ähnliches.

In einer weiteren bevorzugten Ausführungsform ist der Antriebsstrang zwischen einer Leerlaufstellung und einer Antriebsstellung hin und herstellbar, wobei die Aufrollhaspelaufnahmen in der Leerlaufstellung antriebsfrei sind und in der Antriebsstellung Drehmoment aufnehmen.

In einer weiteren bevorzugten Ausführungsform weisen die Aufrollhaspelaufnahmen jeweils eine Welle auf, welche vorzugsweise horizontal ausgerichtet ist, auf welche die Haspeln aufgeschoben werden, wobei vorzugsweise im aufgeschobenen Zustand die Haspeln mit der Haspelaufnahme reibschlüssig in Eingriff stehen. Die Welle wird besonders bevorzugt mittels des Antriebsstrangs angetrieben. Durch das reibschlüssige Angreifen der Haspeln an der Haspelaufnahme, welche mit der Welle mitgedreht wird, wird gewährleistet, dass die Zaundrähte beim Aufrollen stets unter Zug gehalten werden, auch wenn sich die Umfangsgeschwindigkeit innerhalb der Haspel ändert. Je mehr Draht auf der Haspel aufgerollt wird, desto größer wird der Durchmesser, mit dem der Draht auf der Haspel sitzt, und desto höher wird bei gleicher Geschwindigkeit des Fahrzeuges folglich die Umfangsgeschwindigkeit des Drahts. Durch den Reibschluss kann es zwischen der Haspel und der Haspelaufnahme zu Schlupf kommen, und der Schlupf wird dann bei zunehmendem Drahtdurchmesser auf der Haspel entsprechend größer, es bleibt aber dabei, dass ein zuverlässiges Aufrollen bei jeder Geschwindigkeit, die der Bediener des Fahrzeugs noch beherrscht, erfolgen kann.

Die Erfindung wurde vorstehend in einem ersten Aspekt anhand des Systems selbst beschrieben. Die Erfindung betrifft in einem zweiten Aspekt ferner ein Fahrzeug zur Weisezaunhandhabung, mit einem Vorderabschnitt, einem Heckabschnitt, und einem Fahrerabschnitt, der sich in Fahrtrichtung zwischen dem Vorderabschnitt und dem Heckabschnitt befindet und einen seitlichen Zugangsabschnitt aufweist.

Die Erfindung löst die ihr zugrundeliegende Aufgabe bei einem solchen Fahrzeug, indem das Fahrzeug an dem Vorderabschnitt eine erste Montageschnittstelle aufweist, und/oder an dem Heckabschnitt eine zweite Montageschnittstelle aufweist, wobei mittels der Montageschnittstelle ein System zur Weidezaunhandhabung gemäß dem ersten Aspekt angebracht ist.

Die Erfindung macht sich hinsichtlich des Fahrzeugs dieselben Erkenntnisse und Vorteile zunutze, wie das erfindungsgemäße System zur Weidezaunhandhabung. Bevorzugte Ausführungsformen des Systems gemäß dem ersten Aspekt sind gleichzeitig bevorzugte Ausführungsformen des zweiten Aspekts und umgekehrt. Zur Vermeidung von Wiederholungen wird insoweit auf die obigen Ausführungen verwiesen.

In einem weiteren Aspekt betrifft die Erfindung eine Vorrichtung zum fahrzeuggestützten Abrollen von Zaundrähten, insbesondere von elektrischen Drähten eines Weidezauns für ein System nach einer der vorstehenden beschriebenen bevorzugten Ausführungsformen oder ein Fahrzeug nach einer der vorstehend beschriebenen bevorzugten Ausführungsformen.

Die Erfindung löst die ihr zugrundeliegende Aufgabe bei einer solchen Vorrichtung, indem die Abrollvorrichtung gemäß einer der vorstehend beschriebenen Ausführungsformen des ersten Aspekts ausgebildet ist. Die Vorrichtung macht sich diesbezüglich ebenso die Erkenntnisse und Vorteile des Systems gemäß dem ersten Aspekt zunutze. Bevorzugte Ausführungsformen der Abrollvorrichtung sind zugleich bevorzugte Ausführungsformen des Systems und umgekehrt, weswegen insoweit zur Vermeidung von Wiederholungen auf die obigen Ausführungen verwiesen wird.

In einem weiteren Aspekt betrifft die Erfindung eine Vorrichtung zum fahrzeuggestützten Aufrollen von Zaundrähten, insbesondere von elektrischen Drähten eines Weidezauns, für ein System nach einer der vorstehend beschriebenen bevorzugten Ausführungsformen gemäß dem ersten Aspekt, oder ein Fahrzeug gemäß einer der vorstehend beschriebenen bevorzugten Ausführungsformen gemäß dem zweiten Aspekt. Die Erfindung löst bei dieser Vorrichtung die eingangs bezeichnete Aufgabe, indem die Aufrollvorrichtung gemäß einer der vorstehend beschriebenen bevorzugten Ausführungsformen des ersten Aspekts ausgebildet ist.

Die Vorrichtung macht sich auch diesbezüglich die Erkenntnisse und Vorteile des Weidezaunhandhabungssystems des ersten Aspekts zunutze und bevorzugte Ausführungsformen des Weidezaunhandhabungssystems sind zugleich bevorzugte Ausführungsformen der erfindungsgemäßen Aufrollvorrichtung und umgekehrt, weswegen wiederum zur Vermeidung von Wiederholungen auf die obigen Ausführungen verwiesen wird.

In einem weiten Aspekt, der zugleich eine bevorzugte Ausgestaltung des Weidezaunhandhabungssystems gemäß dem ersten Aspekt ist, wie auch ein separater Erfindungsgegenstand, betrifft die Erfindung einen Zaunpfosten für einen Weidezaun, der dazu eingerichtet ist, insbesondere mit einem System nach einer der vorstehend beschriebenen bevorzugten Ausführungsformen verwendet zu werden, beziehungswiese der dazu eingerichtet ist, reversibel lösbar an eine Anzahl von Zaundrähten angebracht zu werden, der sich entlang einer Pfostenlängsrichtung erstreckt, ein erstes Ende mit einer oder mehreren Spitzen zum Verankern des Pfostens im Erdreich, ein gegenüberliegendes zweites Ende aufweist, und eine Anzahl von Drahtösen aufweist, die jeweils eine in dieselbe Richtung eines der beiden Enden weisende Einführöffnung zum Einführen des Zaundrahts in das Innere der Drahtlöse aufweisen. Zaunpfosten für Weidezäune, auch für mobile Weidezaunhandhabungssysteme, sind allgemein bekannt.

Es war Aufgabe der Erfindung, insbesondere im Zusammenhang mit dem eingangs bezeichneten System zur Weidezaunhandhabung, einen Zaunpfosten dahingehend zu verbessern, dass er eine einfachere Installation am Zaun und auch einen einfacheren Abbau des Zauns ermöglicht. Insbesondere lag der Erfindung diesbezüglich die Aufgabe zugrunde, einen Zaunpfosten anzugeben, der von einem Bediener eines Weidezaunhandhabungssystems im Einpersonenbetrieb verwendet werden kann, und der flexibel einsetzbar sein soll.

Die Erfindung löst die ihr zugrundeliegende Aufgabe bei einem Zaunpfosten der vorstehend bezeichneten Art, indem der Zaunpfosten an demjenigen Ende, in dessen Richtung die Einführöffnungen weisen, einen ösenfreien Führungsabschnitt aufweist, der dazu eingerichtet ist, an einem äußersten Zaundraht einer Anzahl von in einer Ebene geführten Zaundrähten seitlich angelegt und in der Pfostenlängsrichtung an dem Zaundraht entlang bewegt zu werden, um die Anzahl Zaundrähte in das Innere der Öse einzuführen oder aus dem Inneren der Öse herauszuführen. Die Erfindung beruht auf der Erkenntnis, dass die vergleichsweise größte Komplikation in der Handhabung des Zaunpfostens beim Installieren eines Weidezauns das Einführen der Zaundrähte in die Drahtösen ist. Bei herkömmlichen Zaunpfosten musste das Einführen der Zaundrähte in die Drahtösen von einem Bediener durchgeführt werden, der die Drähte manuell in die jeweiligen Ösen, eine nach der anderen, einführte. Dies gelang in der Regel nicht vom Fahrzeug aus, sondern musste von einer zusätzlichen Person vorgenommen werden, die hinter oder neben dem Fahrzeug herging. Sofern ein einzelner Bediener für die Installation eines Zauns zuständig war, musste er erst den Zaundraht abrollen, und dann im Nachgang die Zaunpfosten einzeln installieren, und hierbei den Zaun erneut abschreiten.

Die Erfindung folgt dem Ansatz, dass eine große Zeitersparnis erzielt werden kann, wenn der Zaunpfosten vom Bediener aus dem Fahrerabschnitt heraus, insbesondere durch einen seitlichen Zugangsabschnitt mit den Zaundrähten in Eingriff gebracht werden kann, ohne hierfür das Fahrzeug verlassen zu müssen. Der ösenfreie Führungsabschnitt ermöglicht es, den Zaun sehr viel schneller seitlich gegen die Drähte anzulegen. Insbesondere das Einfädeln der obersten Drahtöse in den obersten Zaundraht gelingt durch den ösenfreien Abschnitt sehr zuverlässig, und mit ihm gelingt auch das Einführen der weiteren Zaundrähte in die weiteren Drahtösen, insbesondere wenn jene parallel zueinander am Fahrzeug vorbeigeführt werden. Mit der Erfindung wird es dadurch möglich, im Fahrerabschnitt eine größere Anzahl Zaunpfosten in Griffweite vorzuhalten, mit einem Fahrzeug, welches eine Abrollvorrichtung und mehrere auf Haspeln gelagerte Zaundrähte aufweist, die über entsprechende Umlenkungen seitlich am Fahrzeug vorbeigeführt werden, während das Fahrzeug die Zaunstrecke abfährt, und in den gewünschten Abständen aus dem Fahrerabschnitt, durch den seitlichen Zugangsabschnitt hindurch die Zaunpfosten an die Zaundrähte anzulegen, die Drahtösen mit den Zaundrähten in Eingriff zu bringen, und den Zaunpfosten im Boden zu verankern, ohne hierbei den Fahrerabschnitt verlassen oder sich von ihm entfernen zu müssen. Der Zeitaufwand für den Aufbau eines Weidezauns, insbesondere eines Weidezauns, der Schafherden vor Wölfen schützen soll, wird durch den Zaunpfosten somit radikal verkürzt.

In einer bevorzugten Ausführungsform weist der ösenfreie Führungsabschnitt eine Länge in Pfostenlängsrichtung in einem Bereich von 5 cm bis 20 cm auf, vorzugsweise in einem Bereich von 8 cm bis 15 cm. Eine Länge in diesen bevorzugten Bereichen bietet einen unerwartet guten Kompromiss zwischen Handhabbarkeit des Zaunpfostens insgesamt einerseits und zuverlässiger Bereitstellung der Führungsaufgabe für das Einfädeln der Drahtösen und der Zaundrähte ineinander andererseits.

In einer weiteren bevorzugten Ausführungsform weist der Zaunpfosten mehrere Isolatorelemente auf, wobei die Isolatorelemente jeweils einen Grundkörper aufweisen, an dem die Drahtösen ausgebildet sind, wobei die Drahtösen vorzugsweise an die Grundkörper angeformt sind.

Die Isolatorelemente sind vorzugsweise dazu eingerichtet, den Zaunpfosten von dem elektrischen Strom zu isolieren, der durch die Zaundrähte geleitet wird, um die innerhalb der Zaunfläche befindlichen Tiere vor dem Übertreten des Zauns zu schützen, und, vor allem, um Wildtiere und unbefugte Personen vom Eindringen in die eingezäunte Fläche abzuhalten.

In einer weiteren bevorzugten Ausführungsform sind die Drahtösen als Twist-and-Lock-Ösen ausgeführt, wobei die jeweilige Drahtöse ein erstes Ende am Grundköper, ein von dem Grundkörper beabstandetes zweites Ende, und zwischen den beiden Enden einen sich quer zur Pfostenlängsrichtung erstreckenden Bogenabschnitt aufweist, wobei die Einführöffnung als Schlitz ausgebildet ist, welcher zwischen dem Grundkörper und der Drahtöse entlang verläuft, und auf einer ersten Seite von dem Bogenabschnitt begrenzt wird, und wobei der Schlitz in einer ersten Drehstellung des Zaunpfostens, nämlich der Freigabestellung, parallel zum Zaundraht ausgerichtet ist, und in einer zweiten Drehstellung, nämlich der Verriegelungsstellung, quer zum Zaundraht ausgerichtet ist. Der Zaunpfosten erlaubt auf diese Weise ein besonders einfaches, und einhändiges, Verbinden mit den Zaundrähten.

Der Zaunpfosten muss hierzu lediglich in einer Drehstellung vom Bediener gehalten werden, in der die Schlitze ungefähr in Richtung des Verlaufs der Zaundrähte ausgerichtet sind. Wenn die Zaundrähte, beispielsweise durch das Handhabungssystem gemäß dem ersten Aspekt, parallel in einer vertikalen Ebene geführt sind, muss der Zaunpfosten lediglich von der Seite her gegen die Zaundrähte geführt werden, in einer derartigen Höhe, dass die Drahtösen jeweils kurz unterhalb der Zaundrähte liegen. Ein Aufwärtsbewegen des Zaunpfostens in der ersten Drehstellung führt dann alle Zaundrähte in die Drahtösen ein. Nachdem dies erfolgt ist, kann durch einfaches Drehen des Zaunpfostens, beispielsweise um 90°, in die Verriegelungsstellung der Bogenabschnitt quer zur Richtung der Zaundrähte gestellt werden, sodass der Bogenabschnitt die Zaundrähte am Verlassen der Drahtöse hindert.

In einer weiteren bevorzugten Ausführungsform weist der Grundkörper einen Vorsprung auf, der sich im Wesentlichen parallel zu dem Bogenabschnitt erstreckt, und den Schlitz auf einer gegenüberliegenden zweiten Seite begrenzt. Der Vorsprung erstreckt sich vorzugsweise vom Grundkörper parallel zu dem Bogenabschnitt in diejenige Richtung, in der auch der Bogenabschnitt vom Grundkörper absteht. Hierdurch wird mittels des Vorsprungs ein weiteres Hindernis bereitgestellt, welches die Zaundrähte überwinden müssen, falls sie, beispielsweise durch ein Tier, welches versucht, den Zaun zu durchtreten, nach oben ausgelenkt werden. Sofern sich der Zaunpfosten in der Verriegelungsstellung befindet, wovon man ausgehen kann, wenn der Zaunpfosten im Boden verankert ist, leisten der Bogenabschnitt und der Vorsprung gemeinsam einen Beitrag zum Halten der Zaundrähte innerhalb der Ösen.

In einer weiteren bevorzugten Ausführungsform weist der Grundkörper gegenüber dem Bogenabschnitt eine Drahtführungsmulde auf, wobei die Drahtführungsmulde vorzugsweise als konische oder konkave Verjüngung in der Querrichtung ausgebildet ist. Durch die konkave oder konische Form der Mulde werden die Zaundrähte automatisch in die Mulde hineingezogen, wenn der Zaunpfosten gegen sie in Querrichtung bewegt wird, was ein ungewolltes Lösen der Zaundrähte weiter erschwert.

In einer weiteren bevorzugten Ausführungsform weist der Zaunpfosten mehrere voneinander beabstandete Montageabschnitte für die Isolatorelemente auf, wobei die Isolatorelemente reversibel lösbar in jeweils einem der Montageabschnitte angebracht sind. Die Isolatorelemente sind vorzugsweise als Clips ausgebildet, die jeweils in einer eindeutigen Ausrichtung mit den Montageabschnitten in Eingriff gebracht werden können. Die Montageabschnitte sind vorzugsweise alle in die gleiche Richtung ausgerichtet, sodass die Isolatorelemente ebenfalls an jedem der Montageabschnitte eindeutig ausgerichtet montiert werden können. Ein Verdrehen der Isolatorelemente in unterschiedliche Richtungen, was eine Montage und Demontage erschweren würde, kann durch die so ausgeformten Montageabschnitte und Isolatorelemente verhindert werden.

In einer weiteren bevorzugten Ausführungsform sind die Montageabschnitte identisch ausgebildet und ausgerichtet, derart, dass alle Isolatorelemente mit parallel ausgerichteten Einführöffnungen an dem Zaunpfosten angebracht sind.

In einer weiteren bevorzugten Ausführungsform weisen jeweils benachbarte Montageabschnitte einen (ersten) Abstand zueinander in einem Bereich von 4 cm bis 7 cm auf, insbesondere 5 cm, und/oder einen (zweiten) Abstand zueinander in einem Bereich von 8 cm bis 12 cm, insbesondere 10 cm, und/oder einen (dritten) Abstand zueinander in einem Bereich von 17 cm bis 23 cm, insbesondere 20 cm. Es kann beispielsweise in bevorzugten Ausführungsformen vorgesehen werden, dass an dem Zaunpfosten diejenigen Montageabschnitte, die dem ersten Ende am nächsten sind, zueinander den ersten Abstand oder den zweiten Abstand aufweisen, während Montageabschnitte, die eher dem zweiten Ende zugewandt sind, zueinander den dritten Abstand aufweisen. Insbesondere zum Schutz gegen Wölfe hat sich herausgestellt, dass das Wählen geringerer Abstände in Bodennähe es den Wölfen erschwert, unter den Zaundrähten hindurchzukriechen. Hierdurch wird eine besonders gute Schutzwirkung erzielt

In einer weiteren bevorzugten Ausführungsform beträgt die Anzahl der Montageabschnitte 4 oder mehr, vorzugsweise 6 oder mehr, besonders bevorzugt 10 oder mehr. Der Zaunpfosten muss nicht vollständig mit Isolatorelementen belegt sein. Vielmehr bieten die Montageabschnitte eine hohe Flexibilität der Konfiguration des Zauns insgesamt. Zur Verteidigung der Weidefläche vor Wölfen hat sich eine Konfiguration mit 6 oder mehr Isolatorelementen als besonders vorteilhaft herausgestellt.

Die Erfindung wird nachfolgend unter Bezugnahme auf die beigefügten Figuren anhand bevorzugter Ausführungsbeispiele näher beschrieben. Hierbei zeigen:
- Figs. 1 bis 10: ein System zur Handhabung von Weidezäunen gemäß einem bevorzugten Ausführungsbeispiel in verschiedenen Ansichten und Betriebsstellungen, und
- Figs. 11 bis 17: einen Zaunpfosten gemäß einem bevorzugten Ausführungsbeispiel für das Weidezaun-Handhabungssystem gem. den Figuren 1 bis 10 in verschiedenen Ansichten und Betriebssituationen.

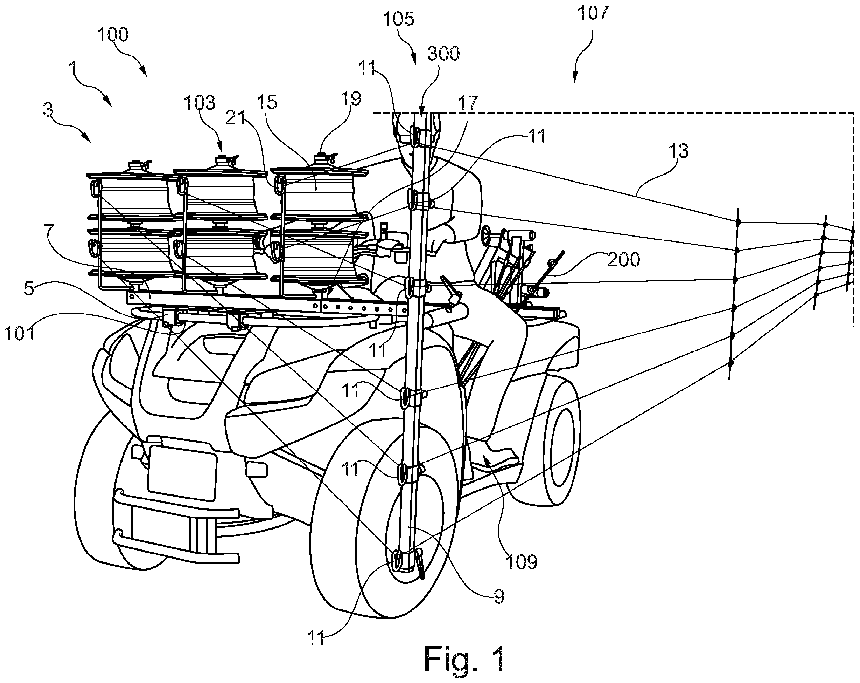

In Fig. 1 wird ein System 1 zur Handhabung von Weidezäunen dargestellt. Das System 1 ist an einem Fahrzeug 100 montiert, welches einen Vorderabschnitt 103, einen mittleren Fahrerabschnitt 105 und einen Heckabschnitt 107 aufweist. Der Fahrerabschnitt 105 ist über einen seitlichen Zugangsabschnitt 109 betretbar und verlassbar.

Das Fahrzeug 100 weist im Vorderabschnitt 103 eine erste Montageschnittstelle 101 auf, die als Tragegerüst ausgebildet und an der Vorderpartie des Fahrzeugs 100 befestigt ist.

Das System 1 weist eine Abrollvorrichtung 3 auf, welche mit einer Montageschnittstelle 5 an der Montageschnittstelle 101 des Fahrzeugs 100 reversibel lösbar befestigt ist. Die Abrollvorrichtung 3 weist einen ersten, horizontal ausgerichteten Ausleger 7 auf und einen zweiten, vertikal ausgerichteten Ausleger 9. Die Abrollvorrichtung 3 weist ferner eine Mehrzahl von Umlenkpunkten 11 auf, die dazu eingerichtet sind, jeweils einen Zaundraht 13 zu führen und derart umzulenken, dass die Zaundrähte 13 vom Vorderabschnitt 103 des Fahrzeugs 100 aus seitlich am Fahrerabschnitt 105 in Richtung des Heckabschnitts 107 am Fahrzeug 100 entlanggeführt werden, wenn das Fahrzeug in Vorwärtsrichtung fährt.

Die Zaundrähte 13 sind jeweils auf einer eigenen Haspel 15 vorgehalten, welche auf einer Haspelaufnahme 17 aufgeschoben ist. Die Haspelaufnahmen 17 fassen in der gezeigten Ausführungsform jeweils zwei Haspeln 15 übereinander und sind als Wellen oder Dorne ausgebildet. Die Haspeln 15 sind jeweils reversibel lösbar mittels einer Klemmeinrichtung 19, vorzugsweise federbelastet, auf der Haspelaufnahme 17 befestigt und stehen mit der Haspelaufnahme 17 reibschlüssig in Kontakt. Wenn das Fahrzeug fährt, werden die Haspeln aufgrund einer zuvor erfolgten Montage der Zaundrähte 13 an einem ersten Zaunpfahl (nicht dargestellt) von den Haspeln 15 abgespult, wobei durch die reibschlüssige Verbindung Schlupf zwischen der Haspelaufnahme 17 und den Haspeln 15 auftritt, sodass die Haspeln bei einer Verzögerung des Fahrzeugs 100 gebremst und gestoppt werden, damit nicht zu viel Zaundraht bei stillstehendem Fahrzeug von den Haspeln 15 abgespult wird.

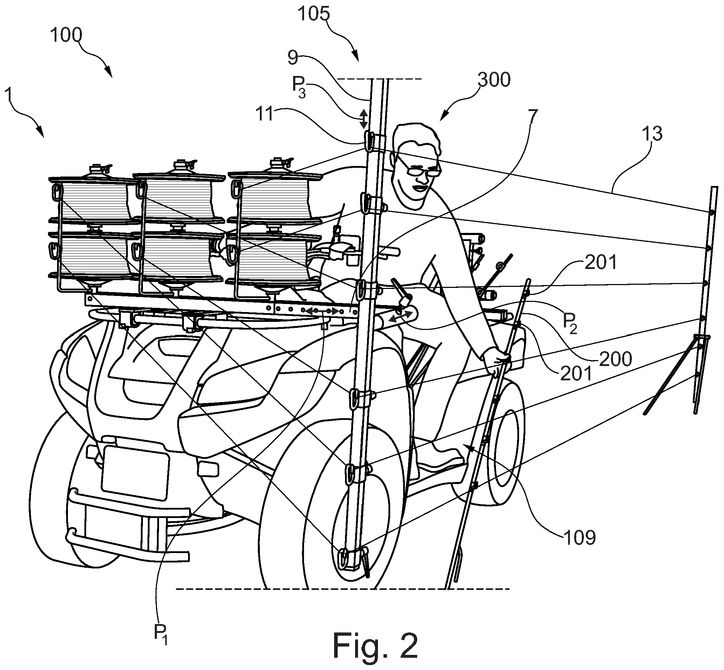

Der zweite Ausleger 9 ist an dem ersten Ausleger 7 sowohl seitlich (Pfeil P₁) und in Fahrzeuglängsrichtung (Pfeil P₂) verstellbar angeordnet, siehe Fig. 2.

Die Umlenkpunkte 11 sind vorzugsweise ebenfalls höhenverstellbar an dem zweiten Ausleger 9 angeordnet, siehe exemplarisch Pfeil P₃ für den obersten der Umlenkpunkte 11.

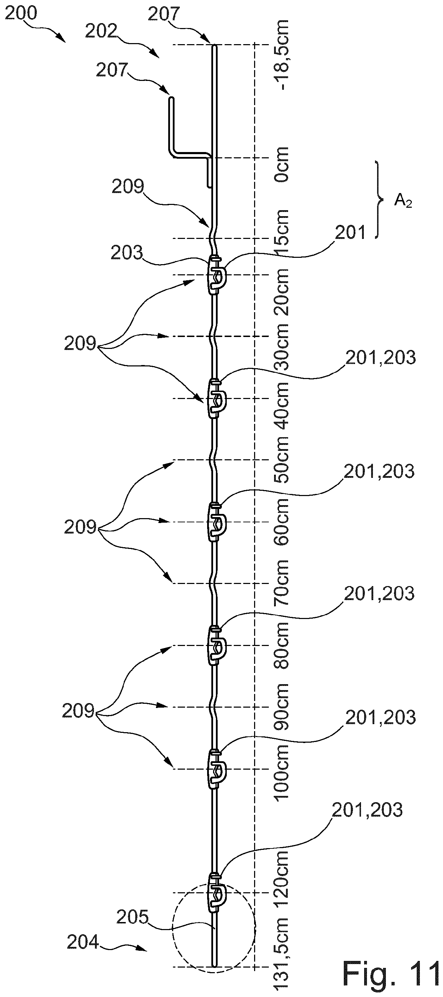

Die Verstellbarkeit des zweiten Auslegers 9 sorgt dafür, dass der Seiten- und Längsabstand des Auslegers 9 an der Abrollvorrichtung 3 so gewählt werden kann, dass die Zaundrähte 13 derart am Fahrzeug 100 seitlich vorbeigeführt werden, dass ein Bediener 300 des Fahrzeugs 100 aus seiner Position im Fahrerabschnitt 105 heraus einen Zaunpfosten 200 manuell gegen die Zaundrähte 13 führen kann, und die am Zaunpfosten vorgesehenen Drahtösen 201 nebst den Zaundrähten 13 in Eingriff bringen kann durch eine kombinierte Seitwärts-/Aufwärtsbewegung, ohne dafür den Fahrerabschnitt 105 des Fahrzeugs 100 verlassen zu müssen. Er kann die Installation der Zaunpfosten 200 durch den Zugangsabschnitt 109 hindurch vornehmen. Auf die Installation der Zaunpfosten 200 an den Zaundrähten 13 wird in den Figuren 11 bis 17 noch näher eingegangen.

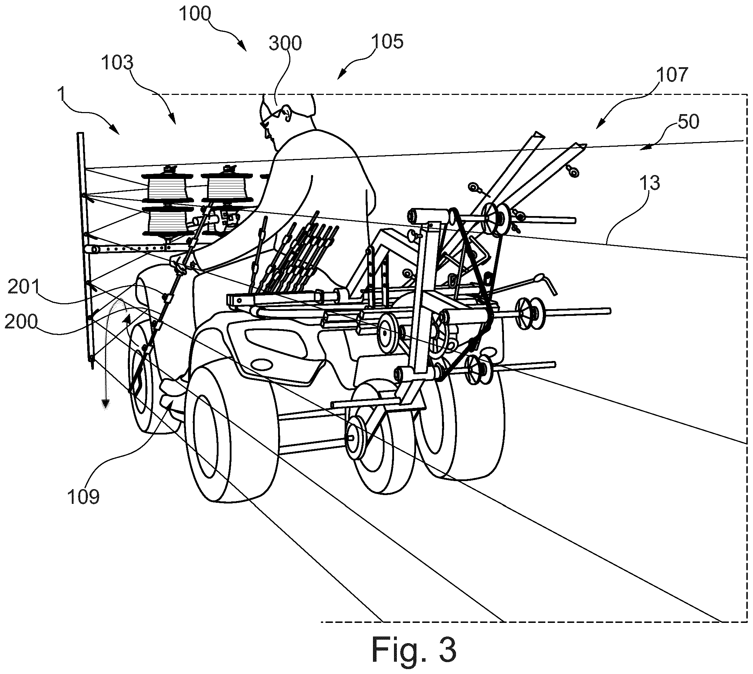

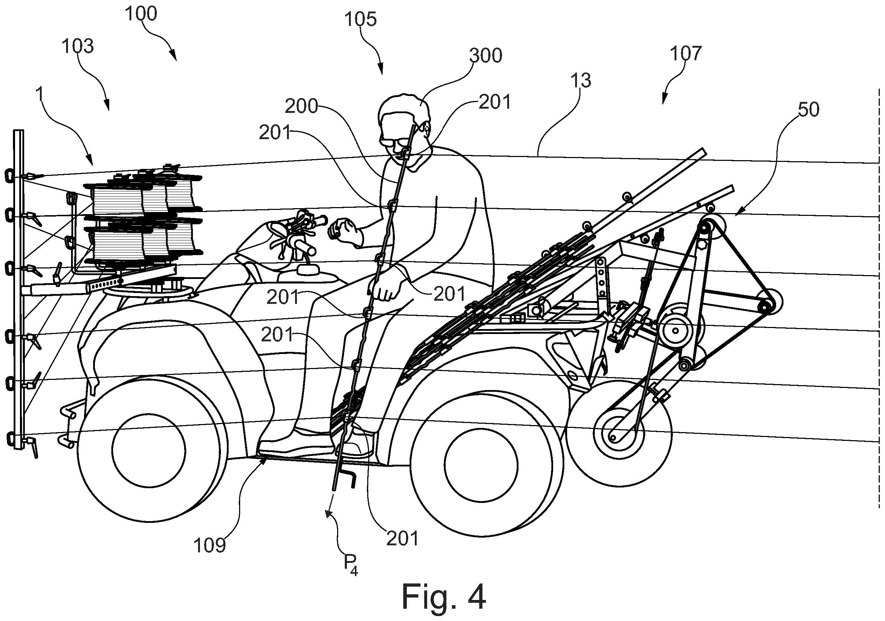

Fig. 3, die alternativ zur Fig. 2 eine Ansicht von schräg hinten auf das Fahrzeug 100 zeigt, veranschaulicht die Anordnung der Abrollvorrichtung 3 im Vorderabschnitt 103 des Fahrzeugs 100 und die Führung der Zaundrähte 13 am Fahrerabschnitt 105 vorbei. In dem Zustand der Fig. 3 ist der Bediener 300 gerade im Inbegriff, den Zaunpfosten 200 seitlich an die Zaundrähte 13 anzulegen, durch eine Aufwärtsbewegung die Drahtösen 201 mit den Zaundrähten 13 in Eingriff zu bringen, und sodann durch eine abwärts gerichtete Stoßbewegung den Zaunpfosten 200 im Erdreich zu verankern, siehe insbesondere Fig. 4.

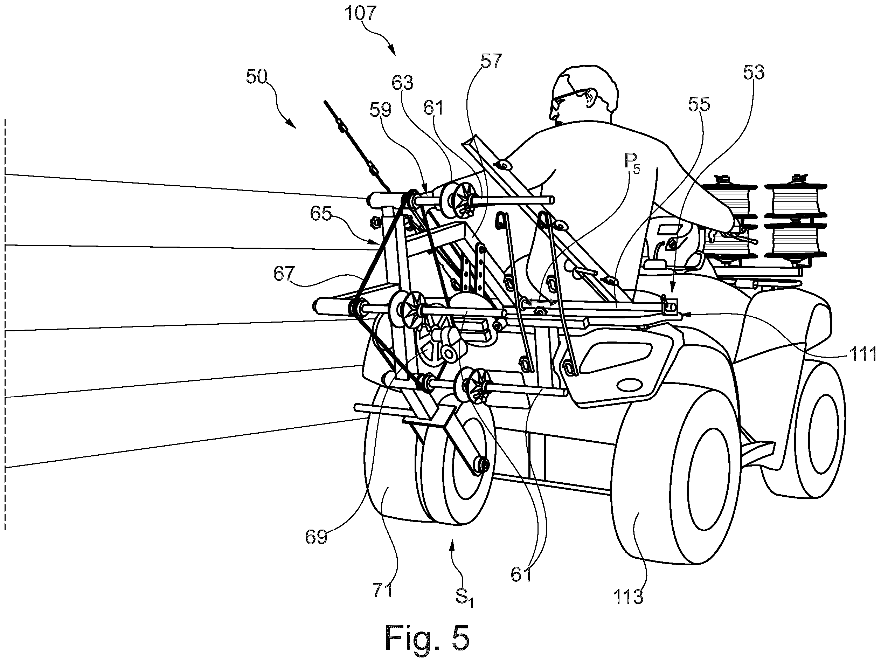

Die Figuren 3 und 4 zeigen auch bereits eine Aufrollvorrichtung 50 im Heckabschnitt 107 des Fahrzeugs, auf welche in den Figuren 5 bis 9 näher eingegangen wird.

In Fig. 4 ist ein Betriebszustand gezeigt, in dem die Drahtösen 201 jeweils mit den Zaundrähten 13 in Eingriff gebracht wurden und in eine Verriegelungsstellung gebracht wurden, sodass der Zaunpfosten 200 in Richtung des Pfeils P4 ins Erdreich gestoßen werden kann. Die Zaundrähte 13 sind zu diesem Zeitpunkt bereits verliersicher mit dem Zaunpfosten 201 verbunden worden, nach wie vor ohne es erforderlich zu machen, dass der Bediener 300 das Fahrzeug 100 verlässt. Bei ausreichender Übung ist es sogar möglich, die Installation vorzunehmen, ohne das Fahrzeug 100 stoppen zu müssen.

Das Fahrzeug 100 weist im Heckabschnitt 107 eine Aufrollvorrichtung 50 auf, die mittels einer Montageschnittstelle 53 reversibel lösbar an einer korrespondierenden zweiten Montageschnittstelle 111 des Fahrzeugs 107 befestigt ist. Die Montageschnittstelle 111 ist beispielsweise ebenfalls als Traggerüst ausgebildet, wie am Vorderabschnitt 103 des Fahrzeugs.

Die Aufrollvorrichtung 50 weist eine Schiene 55 auf, entlang derer ein Ausleger 57 in Richtung des Pfeils P₅ hin und her verschoben werden kann. In Fig. 5 ist die Aufrollvorrichtung 50 in einer ersten Stellung S₁ gezeigt, die gewissermaßen eine Leerlaufstellung darstellt. Die Aufrollvorrichtung 50 weist an dem Ausleger 57 eine Anzahl Haspelaufnahmen 59 auf, wobei an den Haspelaufnahmen 59 jeweils eine Welle 61 vorgesehen ist, die zur Aufnahme einer oder mehrerer Haspeln eingerichtet ist. Im Unterschied zu der Abrollvorrichtung 3 sind die Wellen 61 allerdings mittels eines Antriebsstrangs 65 rotatorisch antreibbar, und mit ihnen die an den Wellen 61 angeordneten Klemmeinrichtungen 63, die dazu eingerichtet sind, jeweils die Haspeln 15 reibschlüssig zu halten.

Der Antriebsstrang 65 weist eine Antriebskette 67 auf, die mittels eines Kettenblatts 69 angetrieben wird. Das Kettenblatt 69 ist drehmomentübertragend mit einem Antriebsrad 71 verbunden, wobei das Antriebsrad 71 dazu eingerichtet ist, drehmomentübertragend mit einem der Räder 113 des Fahrzeugs 100 verbunden zu werden.

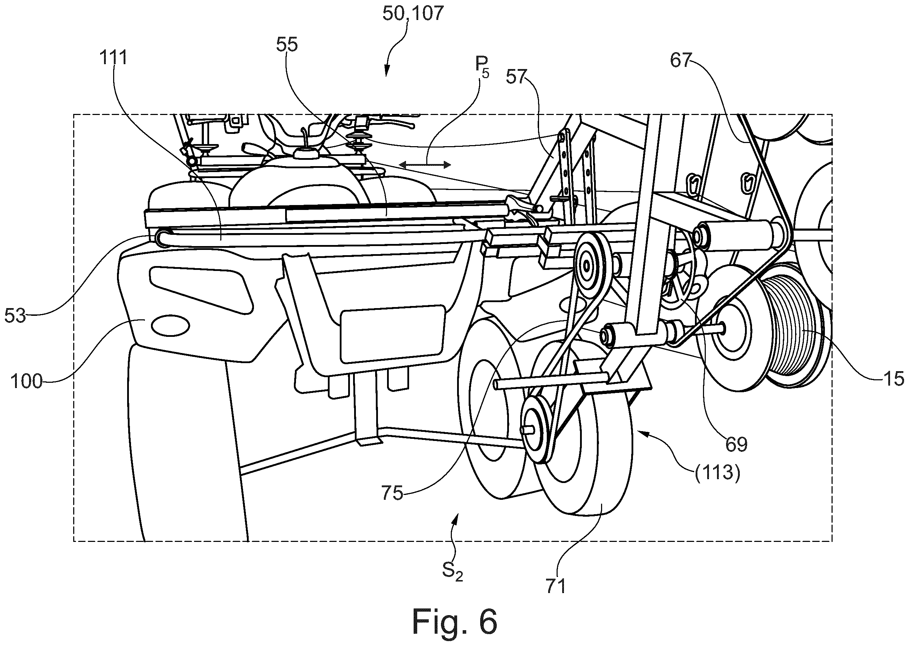

Das Anschließen des Antriebsstrangs 65 an das Rad 113 wird erreicht, indem die Aufrollvorrichtung 50 entlang des Pfeils P₅ von der in Fig. 5 gezeigten ersten Stellung S₁ in eine zweite Stellung S₂ versetzt wird, siehe Fig. 6. Das Antriebsrad 71 liegt an dem Rad 113 an und wird in Rotation versetzt, sobald sich auch das Rad 113, beispielsweise bei einer Vorwärtsfahrt des Fahrzeugs 100, in Bewegung versetzt. Die Drehmomentübertragung von dem Antriebsrad 71 auf das Kettenblatt 69 erfolgt vorzugsweise über einen Riementrieb 75. Wie Fig. 6 ferner zu entnehmen, können spätestens jetzt, aber optional auch bereits vorher, wenn sich die Aufrollvorrichtung 50 noch in der Stellung S₁ befindet, Haspeln 15 auf die Haspelaufnahme 59 aufgeschoben werden. Die Wellen 61 werden vorzugsweise alle mit derselben Produktionsgeschwindigkeit über die Kette 67 angetrieben. Dadurch, dass die Haspeln 15 schlupfbehaftet auf den Wellen 61 befestigt werden, regulieren sich die Rotationsgeschwindigkeiten der Haspeln 15 selber, unabhängig vom Füllgrad mit Zaundraht.

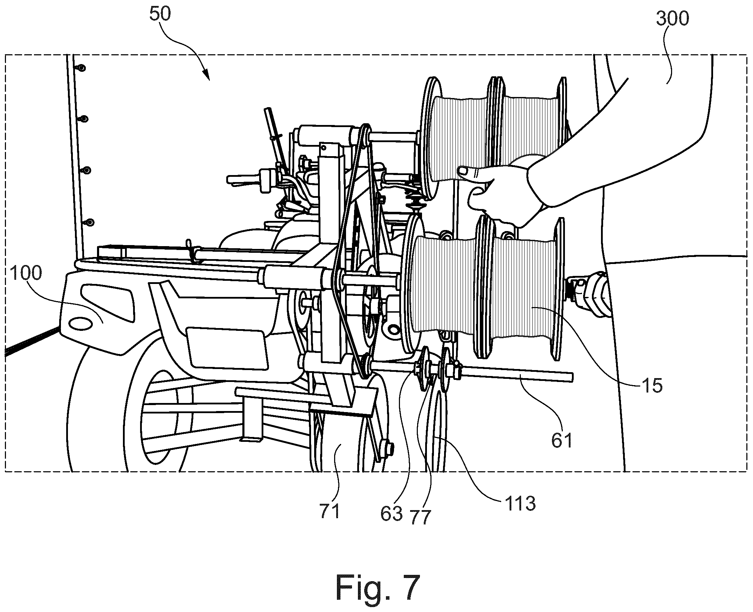

Der Montagevorgang der Haspeln 15 auf der Aufrollvorrichtung 50 ist in Fig. 7 illustriert. Die Haspeln 15 können von dem Bediener 300 manuell auf die Wellen 61 aufgeschoben und, vorzugsweise federbelastet, mittels der Klemmeinrichtungen 63 reibschlüssig mit den Wellen 61 verbunden werden. Exemplarisch ist an der untersten Welle 61 eine Feder 77 in der Klemmeinrichtung dargestellt.

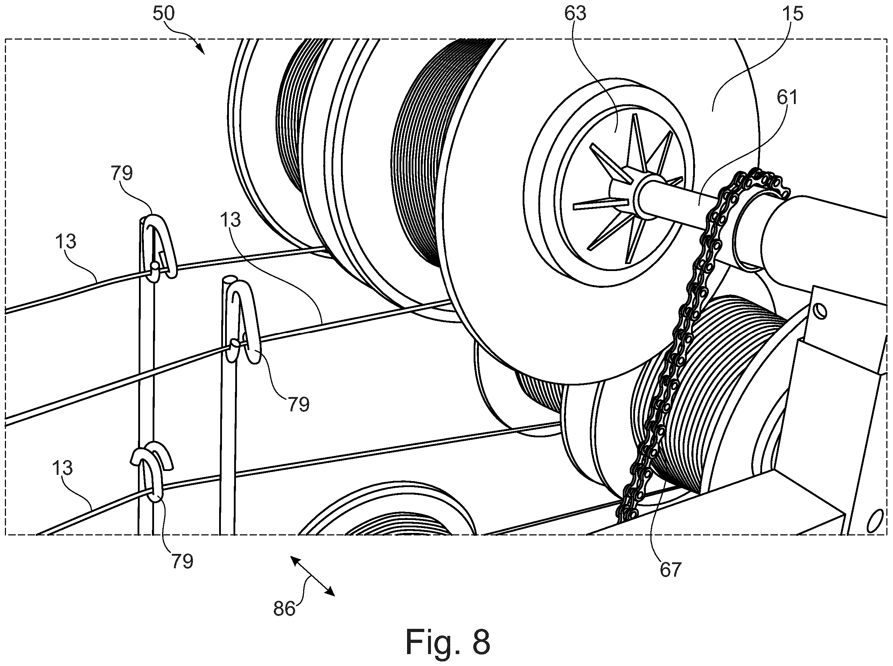

Fig. 8 zeigt einen Detailausschnitt der Aufrollvorrichtung 50 während eines Aufrollvorgangs. Die Vorrichtung 50 weist eine Anzahl von Umlenkpunkten 79 auf, die jeweils an eigenen Auslegern 81 vorbehalten werden, wobei jeder der Ausleger 81 beispielsweise 3 Umlenkpunkte aufweisen kann für eine Verwendung mit insgesamt sechs Haspeln 15 an der Aufrollvorrichtung 50. Die Ausleger 81 für die Umlenkpunkte 79 können vorzugsweise in Richtung des Pfeils P₆ seitlich verstellt werden, um eine optimale Führung der Zaundrähte 13 auf die Haspeln 15 zu ermöglichen. Die Seitenabstände der Umlenkpunkte 79 der jeweiligen Ausleger können an die Breite der verwendeten Haspeln 15 angepasst werden. Zudem ist in Fig. 8 das reibschlüssige Anliegen der Haspeln 15 an den jeweiligen Klemmeinrichtungen 63 noch einmal näher gezeigt.

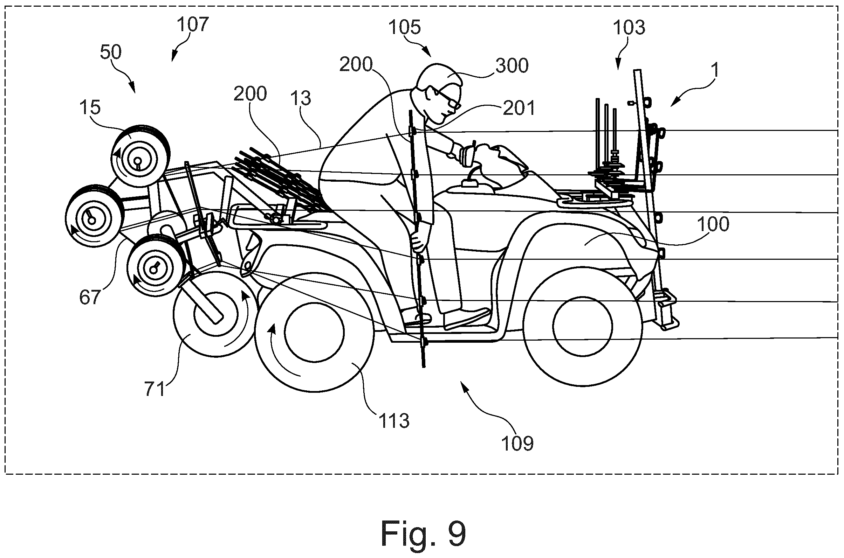

Fig. 9 illustriert das Aufnehmen eines Zaunpfostens 200 durch den Bediener 300, während der Zaundraht 13 auf die Haspeln 15 aufgerollt wird. Das Aufnehmen der Zaunpfosten 200 kann während der Fahrt geschehen, wie gezeigt. Nach dem Anheben der Zaunpfosten 200 und Entfernen aus dem Erdreich kann der Bediener 300 die Zaunpfosten 200 mit den Drahtösen 201 mit den Zaundrähten 13 außer Eingriff bringen und von den Zaundrähten 13 entfernen. Hierbei muss wiederum der Bediener 300 nicht den Fahrerabschnitt 105 verlassen, sondern kann das Separieren der Zaunpfosten 200 von den Zaundrähten 13 durch den Zugangsabschnitt 109 hindurch vornehmen, und dies sogar einhändig. Die Abrollvorrichtung 3 ist in Fig. 9 zwar noch in montiertem Zustand auf dem Fahrzeug 100 gezeigt. Sie wird für den Aufrollvorgang aber nicht benötigt. Das System 1 ist in dem gezeigten Ausführungsbeispiel mit beiden Komponenten, der Abrollvorrichtung 3 und der Aufrollvorrichtung 50, gezeigt. Das erfindungsgemäße System kann aber gleichwohl auch nur eine der Komponenten aufweisen.

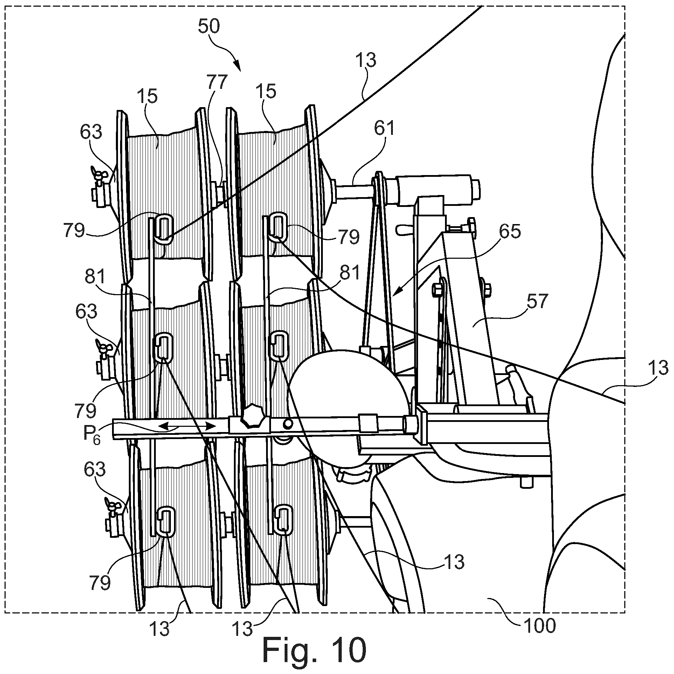

In Fig. 10 sind noch einmal die Umlenkpunkte 79 an ihren jeweiligen Auslegern 81 gezeigt. Wie aus den Figuren 8 bis 10 zu erkennen ist, wird auch im Aufrollbetrieb der Zaundraht 13 am Zugangsabschnitt 109, für den Bediener 300 gut erreichbar, vorbeigeführt.

Nachdem in den vorstehenden Figuren 1 bis 10 vornehmlich das System zur Weidezaunhandhabung in montiertem Zustand an einem Fahrzeug gezeigt wurde, wird im Folgenden ein weiterer relevanter Erfindungsaspekt näher beschrieben, nämlich der auch im vorstehenden Ausführungsbeispiel bereits zu sehende Zaunpfosten 200, der ebenso einen Beitrag zur besseren und flexibleren Weidezaunhandhabung leistet.

Der Zaunpfosten 200 weist ein erstes Ende 202 auf, und entlang seiner Pfostenlängsachse gegenüberliegend ein zweites Ende 204. An dem ersten Ende 202 sind eine oder mehrere Spitzen 207 zur Verankerung des Zaunpfostens 200 im Erdreich angeordnet. Der Bereich des ersten Endes 202, in dem die Spitzen 207 angeordnet sind, hat vorzugsweise eine Länge in einem Bereich von 10 cm bis 25 cm.

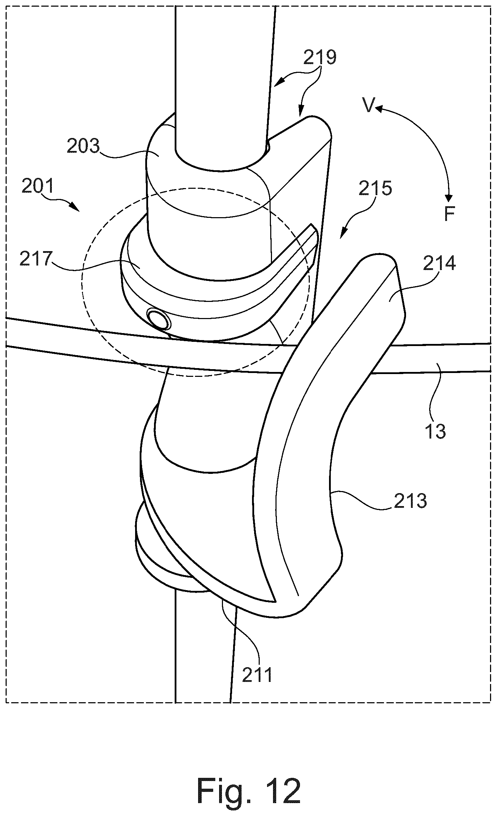

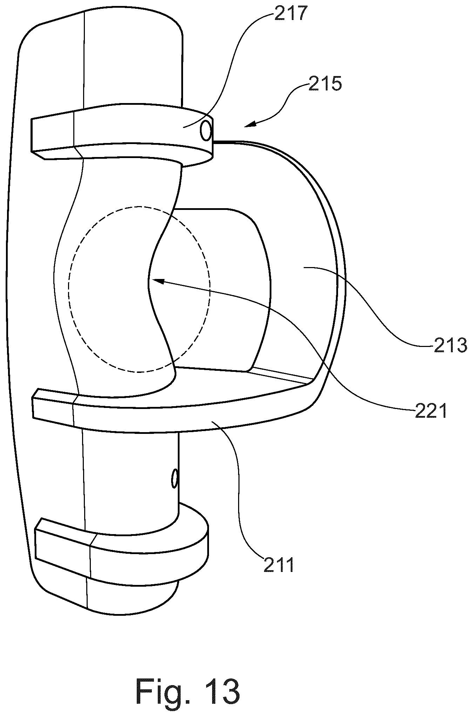

Über die Länge des Zaunpfostens 200 verteilt sind mehrere Drahtösen 201 angeordnet. Die Drahtösen 201 sind jeweils als reversibel lösbare Clips ausgebildet, vgl. Figuren 12 und 13. Die Drahtösen 201 sind jeweils an einem Isolatorelement 203 angeordnet, insbesondere einstückig angeformt.

An dem zweiten Ende 204 endet der Zaunpfosten 200 nicht, wie früher üblich, mit einer Drahtöse, sondern mit einem ösenfreien Führungsabschnitt 205, der eine Länge in einem Bereich von 5 cm bis 15 cm aufweist. Mittels des ösenfreien Führungsabschnitts 205 ist es möglich, den Zaunpfosten 200 deutlich schneller und wiederholgenauer seitlich gegen die Zaundrähte 13 (vgl. Figuren 1 bis 10) zu führen, um dann in einem nächsten Schritt alle Zaundrähte gleichzeitig oder sukzessive in die Drahtösen 201 einzuführen.

Der Zaunpfosten 200 weist eine Vielzahl von Montageabschnitten 209 auf, die ein wellenförmiges Positionierelement aufweisen. Die Montageabschnitte sind auf diese Weise dazu ausgebildet, die Isolatorelemente 203 in lediglich einer einzigen Ausrichtungsposition aufnehmen zu können, sodass alle Isolatorelemente 203, und mit ihnen alle Drahtösen 201, in die gleiche Richtung ausgerichtet am Zaunpfosten 200 aufgenommen werden.

Die Anzahl der Montageabschnitte 209 am Zaunpfosten 200 ist vorzugsweise größer als die benötigte Zahl der Drahtösen 201, um eine größere Flexibilität hinsichtlich der Beabstandung der Zaundrähte 13 voneinander am Weidezaun zu ermöglichen. Die Abstände der Zaundrähte 13 zueinander können so gewählt werden, dass besonders guter Schutz gegen bestimmte Arten von Eindringlingen in die Weideflächen gewährleistet wird, beispielsweise auch gegen Wölfe.

Die Isolatorelemente 203 sind vorzugsweise in einer Signalfarbe ausgebildet und können durch Einklicken und Ausklicken mit dem Zaunpfosten 200 verbunden und von ihm gelöst werden. Ein selbsttätiges Lösen und Verrutschen wird durch die Formung der Montageabschnitte 209 vermieden.

Die Figuren 12 und 13 zeigen eine detaillierte Ansicht eines Isolatorelements 203. Das Isolatorelement 203 weist einen Grundkörper auf, von dem aus sich an einer Basis ein Vorsprung 211 quer zur Pfostenlängsachse erstreckt. An diesem Vorsprung 211 ist ein bogenförmiger Abschnitt 213 ausgebildet, der an seinem den Vorsprung 211 gegenüberliegenden Ende einen Spalt 215 relativ zum Grundkörper definiert. Dieser Spalt 215 ist dazu eingerichtet, in einer Freigabestellung F den Zaundraht 13 in beide Richtungen hindurch passieren zu lassen. In der gezeigten Ausrichtung in Fig. 12 ist der Zaunpfosten 200, und mit ihm die Drahtöse 201, aus der Freigabestellung F bereits in eine Verriegelungsstellung V verdreht worden, in der das Ende 214 des bogenförmigen Abschnitts 213 über dem Zaundraht 13 liegt und diesen am Verlassen des Innenbereichs der Drahtöse 201 hindert.

Zusätzlich weist das Isolatorelement 203 einen Vorsprung 217 auf, der sich parallel zu dem Ende 214 des bogenförmigen Abschnitts 213 erstreckt und den Spalt 215 von einer dem bogenförmigen Abschnitt 213 gegenüberliegenden Ende her definiert. In der gezeigten Verriegelungsstellung V liegt auch der Vorsprung 217 oberhalb des Zaundrahts 13 und erschwert dessen unbeabsichtigtes Entfernen aus dem Innenraum der Drahtöse 201. Der Vorsprung 217 ist, wie der Vorsprung 211, einteilig an dem Grundkörper des Isolatorelements 203 ausgebildet.

Das Isolatorelement 203 weist im Innenbereich der Drahtöse 201 eine Mulde 221 auf, die vorzugsweise als konkave Verjüngung ausgebildet ist. Die Mulde 221 ist so ausgeformt, dass der Zaundraht 13 in Richtung des Grundes der Mulde 221 verläuft, wenn er gegen das Isolatorelement 203 gedrückt wird. Vorzugsweise folgt die Mulde 221 dem wellenförmigen Verlauf des Montageabschnitts 209.

Die Isolatorelemente 203 werden vorzugsweise dergestalt am Zaunpfosten 200 angebracht, dass der Schlitz 215 dem zweiten Ende 204 zugewandt ist, und der Vorsprung 211, also der Grund des bogenförmigen Abschnitts 213, dem ersten Ende 202 zugewandt ist.

Weiter oben wurde bereits beschrieben, dass ein besonderer Vorteil des Zaunpfostens 200 in seiner Einhandbedienung liegt, und dieser Umstand macht den Zaunpfosten 200 besonders geeignet zur Verwendung mit dem vorstehend beschriebenen System 1 zur Weidezaunhandhabung.

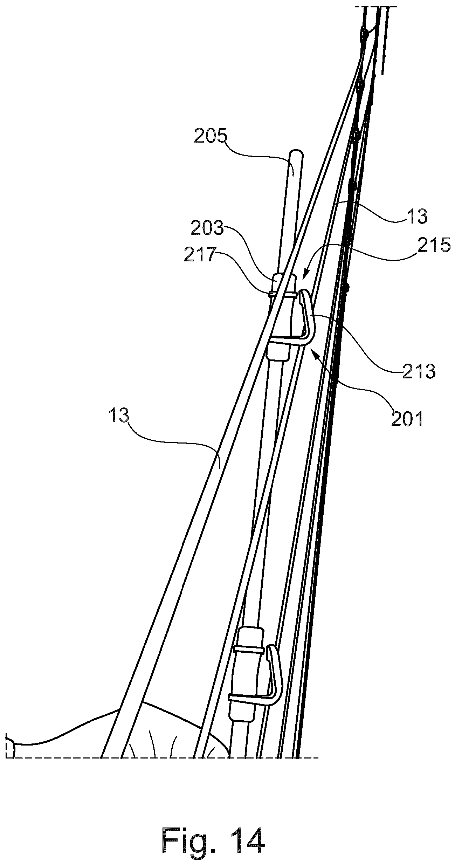

Die Bewegungssequenz der Figuren 14 bis 17 illustriert die Bedienungsweise des Zaunpfostens 200 vom Fahrerabschnitt 105 des Fahrzeugs 100 gemäß den Figuren 1 bis 10 aus, durch den Zugangsabschnitt 109 hindurch. In Fig. 14 befindet sich der Weidezaun in einer Aufbauphase, und es müssen Zaunpfosten installiert werden. Ein Bediener hält einen Zaunpfosten 200 in der Hand, die winklige Ausrichtung des Zaunpfostens 200 entspricht hierbei einer parallelen Ausrichtung des Schlitzes 215 zu dem Zaundraht 13, der Zaunpfosten 200 befindet sich also in seiner Freigabestellung F.

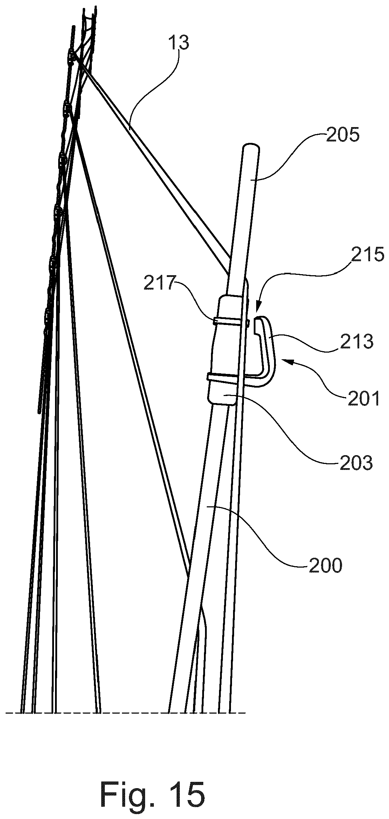

Das Isolatorelement 203 befindet sich unterhalb eines Zaundrahts 13. Ausgehend von der Stellung gemäß Fig. 14 wird der Zaunpfosten 200 nach rechts bewegt, und gegen einen oder mehrere Zaundrähte 13 angelegt. Der ösenfreie Führungsabschnitt 205 am oberen Ende des Zaunpfostens 200 erleichtert die Positionsfindung für den Zaunpfosten in Fig. 15.

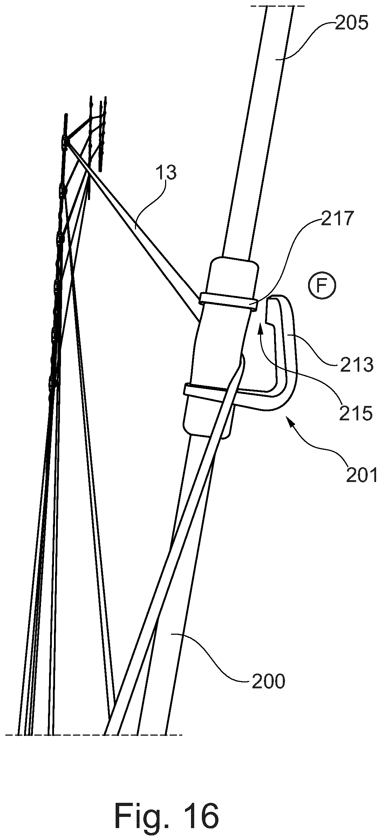

Ausgehend von der Stellung gemäß Fig. 15 kann einer oder können mehrere Zaundrähte 13 gleichzeitig durch Aufwärtsbewegen des Zaunpfostens 200 in seiner Freigabestellung F in das Innere der Drahtöse 201 verbracht werden. Die Zaundrähte 13 gleiten hierbei, ungehindert durch den Vorsprung 217, durch den Schlitz 215 hindurch. Fig. 16 zeigt einen solchen Zustand, in dem die Aufwärtsbewegung abgeschlossen ist, und sich ein Zaundraht 13 im Inneren der Drahtöse 201 befindet.

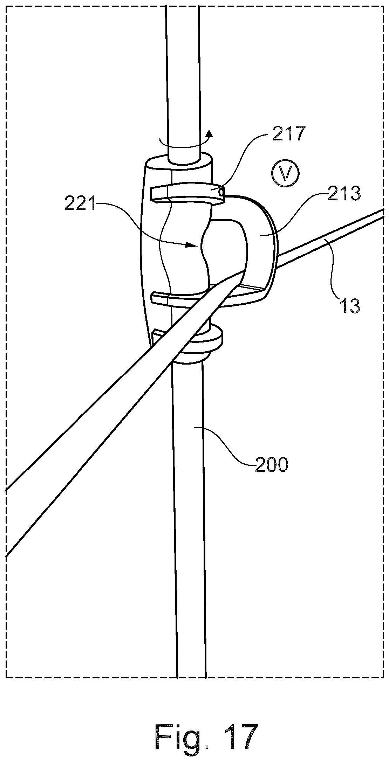

Das simultane Verriegeln des Zaunpfostens relativ zu den Zaundrähten 13 geschieht nun durch einfaches Rotieren des Handgelenks mit dem Zaunpfosten um 90° in die Verriegelungsstellung V, siehe Fig. 17. Die Zaundrähte 13 sind nun daran gehindert, unbeabsichtigt das Innere der Drahtöse 201 zu verlassen, durch die quer über ihnen stehenden bogenförmigen Abschnitte 213 und Vorsprünge 217.

Die komplette Installationsprozedur, die in den Figuren 14 bis 17 zu sehen ist, kann von einem einzigen Bediener mit einer einzigen Hand in einer flüssigen Bewegung durchgeführt werden. Hierzu muss der Bedienerden Fahrerabschnitt 105 des Fahrzeugs 100 wie gesagt nicht verlassen, sodass der Zaun sehr zeiteffizient und arbeitsökonomisch aufgebaut werden kann.

Der Abbau des Zaunes und das Entfernen eines Zaunpfostens 200 vom Zaundraht 13 vollzieht sich genauso wie auf den Figuren 14 bis 17, lediglich in umgekehrter Reihenfolge.

Es ist hieraus ersichtlich, dass der Zaunpfosten 200 gemäß den Figuren 11 bis 17 und das System 1 zur Weidezaunhandhabung gemäß den Figuren 1 bis 10 synergistisch zusammenwirken und gemeinsam, aber auch bereits jeweils für sich einen deutlichen Beitrag zur Flexibilisierung und Verbesserung der Handhabung von Weidezäunen leisten.

### Bezugszeichenliste:

- 1: System
- 3: Abrollvorrichtung
- 5: Montageschnittstelle
- 7: Ausleger
- 9: Ausleger
- 11: Umlenkpunkten
- 13: Zaundraht
- 15: Haspel
- 17: Haspelaufnahme
- 19: Klemmeinrichtung
- 50: Aufrollvorrichtung
- 53: Montageschnittstelle
- 55: Schiene
- 57: Ausleger
- 59: Haspelaufnahmen
- 61: Welle
- 63: Klemmeinrichtungen
- 65: Antriebsstrangs
- 67: Antriebskette
- 69: Kettenblatts
- 71: Antriebsrad
- 75: Riementrieb
- 77: Feder
- 79: Umlenkpunkten
- 81: Auslegern
- 100: Fahrzeug
- 101: Montageschnittstelle
- 103: Vorderabschnitt
- 105: Fahrerabschnitt
- 107: Heckabschnitt
- 109: Zugangsabschnitt
- 111: Montageschnittstelle
- 113: Rad
- 200: Zaunpfosten
- 201: Drahtösen
- 202: erstes Ende
- 203: Isolatorelement
- 204: zweites Ende
- 205: Führungsabschnitt
- 207: Spitzen
- 209: Montageabschnitten
- 211: Vorsprung
- 213: Bogenabschnitt
- 214: Ende (bogenförmiger Abschnitt)
- 215: Spalt
- 217: Vorsprung
- 221: Mulde
- 300: Bediener
- F: Freigabestellung
- V: Verriegelungsstellung

## Patentansprüche

1. Weidezaunhandhabungssystem (1) zur Montage auf einem Fahrzeug (100), wobei das Fahrzeug (100) einen Fahrerabschnitt (105) aufweist, der in Fahrtrichtung zwischen einem Vorderabschnitt (103) des Fahrzeugs (100) und einem Heckabschnitt (107) des Fahrzeugs (100) angeordnet ist, und einen seitlichen Zugangsabschnitt (109) aufweist, mit
- einer Vorrichtung (3) zum fahrzeuggestützten Abrollen einer Anzahl von individuellen Zaundrähten (13), insbesondere von elektrischen Drähten eines Weidezauns, und/oder
- einer Vorrichtung (50) zum fahrzeuggestützten Aufrollen einer Anzahl von Zaundrähten (13), insbesondere von elektrischen Drähten eines Weidezauns;
wobei die jeweilige Vorrichtung (3, 50)
- eine Montageschnittstelle (101, 111) zur Befestigung der Vorrichtung (3, 50) auf dem Fahrzeug (100) aufweist, und
- eine Anzahl Haspelaufnahmen (17, 59) für jeweils mindestens eine Zaundrahthaspel (15) aufweist, wobei die Haspelaufnahmen (17, 59) derart positioniert sind, dass der Zaundraht (13) seitlich entlang des Fahrzeugs (100) von dem Vorderabschnitt (103) aus an dem Zugangsabschnitt (109) vorbeigeführt wird, wenn das Fahrzeug (100) fährt, um ein manuelles Handhaben eines oder mehrerer Zaunpfosten (200), insbesondere Verbinden mit und/oder Separieren von der Anzahl Zaundrähte (13), durch den Zugangsabschnitt (109) hindurch zu ermöglichen.

2. System (1) nach Anspruch 1,
wobei die Abrollvorrichtung (3) eine Montageschnittstelle (5) zur Befestigung der Vorrichtung (3) an dem Vorderabschnitt (103) des Fahrzeugs (100) aufweist, und
eine Anzahl Abrollhaspelaufnahmen (17) für jeweils mindestens eine Zaundrahthaspel (15), wobei die Abrollhaspelaufnahmen (17) derart positioniert sind, dass der Zaundraht (13) seitlich entlang des Fahrzeugs (100) von dem Vorderabschnitt (103) aus an dem Zugangsabschnitt (109) vorbeigeführt wird, wenn das Fahrzeug (100) fährt, um ein manuelles Verbinden eines oder mehrerer Zaunpfosten (200) mit der Anzahl Zaundrähte (13) durch den Zugangsabschnitt (109) hindurch zu ermöglichen.

3. System (1) nach Anspruch 1 oder 2,
**dadurch gekennzeichnet, dass** die Abrollvorrichtung (3) eine Anzahl von Umlenkpunkten (11) aufweist, die einer Anzahl Abrollhaspelaufnahmen (17) zugeordnet und derart positioniert sind, dass die Anzahl Zaundrähte (13) in einer gemeinsamen Ebene, vorzugsweise vertikal, seitlich entlang des Fahrzeugs (100) verlaufen.

4. System (1) nach einem der vorstehenden Ansprüche,
**dadurch gekennzeichnet, dass** der Zaun eine Anzahl von Zaunpfosten (200) aufweist, wobei der Zaunpfosten (200) eine der Anzahl Drähte (13) entsprechende Anzahl Drahtösen (201) aufweist, die zueinander einen ersten Abstand aufweisen, wobei die Abrollhaspelaufnahmen (17), insbesondere die den Abrollhaspelaufnahmen (17) zugeordneten Umlenkpunkte (11), zueinander einen zweiten Abstand aufweisen, der gleich oder geringer ist als der erste Abstand.

5. System (1) nach einem der vorstehenden Ansprüche,
**dadurch gekennzeichnet, dass** die Umlenkpunkte (11) höhenverstellbar und/oder seitlich verstellbar und/oder längs verstellbar an der Abrollvorrichtung (3) angeordnet sind, und vorzugsweise relativ zueinander höhenverstellbar sind.

6. System (1) nach einem der vorstehenden Ansprüche,
**dadurch gekennzeichnet, dass** die Abrollhaspelaufnahmen (17) jeweils eine Welle (61) aufweisen, auf welche die Zaundrahthaspeln (15) aufgeschoben werden, wobei vorzugsweise im aufgeschobenen Zustand die Zaundrahthaspeln (15) mit der Haspelaufnahme (17) reibschlüssig in Eingriff stehen.

7. System (1) nach einem der vorstehenden Ansprüche,
wobei die Aufrollvorrichtung (50) eine Montageschnittstelle (53) zur Befestigung der Vorrichtung (50) an dem Heckabschnitt (107) des Fahrzeugs (100) aufweist, und
eine Anzahl Aufrollhaspelaufnahmen (59) für jeweils mindestens eine Zaundrahthaspel (15), wobei die Haspelaufnahmen (59) derart positioniert sind, dass der Zaundraht (13) seitlich entlang des Fahrzeugs (100) von dem Heckabschnitt (107) aus an dem Zugangsabschnitt (109) vorbeigeführt wird, wenn das Fahrzeug (100) fährt, um ein manuelles Separieren eines oder mehrerer Zaunpfosten (200) von der Anzahl Zaundrähte (13) durch den Zugangsabschnitt (109) hindurch zu ermöglichen.

8. System (1) nach Anspruch 7,
wobei die Aufrollvorrichtung (50) einen Antriebsstrang (65) aufweist, der dazu eingerichtet ist, antriebsseitig mit dem Fahrzeug (100) verbunden zu werden und abtriebsseitig drehmomentübertragend mit den Aufrollhaspelaufnahmen (59) verbunden ist, und der dazu eingerichtet ist, die Aufrollhaspelaufnahmen (59) zum Aufrollen des Zaundrahts (13) drehend anzutreiben, wenn das Fahrzeug (100) entlang des Zauns bewegt wird.

9. System (1) nach Anspruch 8,
**dadurch gekennzeichnet, dass** der Antriebsstrang (65) dazu eingerichtet ist, drehmomentübertragend mit einer angetriebenen Achse des Fahrzeugs (100), und/oder einem angetriebenen Rad (113) des Fahrzeugs (100) verbunden zu werden.

10. System (1) nach Anspruch 8 oder 9,
**dadurch gekennzeichnet, dass** der Antriebsstrang (65) zwischen einer Leerlaufstellung und einer Antriebsstellung hin und her stellbar ist, wobei die Aufrollhaspelaufnahmen (59) in der Leerlaufstellung antriebsfrei sind, und in der Antriebsstellung Drehmoment aufnehmen.

11. System (1) nach einem der Ansprüche 8 bis 10,
**dadurch gekennzeichnet, dass** die Aufrollhaspelaufnahmen (59) jeweils eine Welle (61) aufweisen, vorzugsweise horizontal ausgerichtet, auf welche die Haspeln (15) aufgeschoben werden, wobei vorzugsweise im aufgeschobenen Zustand die Haspeln (15) mit der Haspelaufnahme (59) reibschlüssig in Eingriff stehen.

12. Fahrzeug (100) zur Weidezaunhandhabung, mit
einem Vorderabschnitt (103), einem Heckabschnitt (107) und einem Fahrerabschnitt (105), der sich in Fahrtrichtung zwischen dem Vorderabschnitt (103) und dem Heckabschnitt (107) befindet und einen seitlichen Zugangsabschnitt (109) aufweist,
**dadurch gekennzeichnet, dass** das Fahrzeug (100)
an dem Vorderabschnitt (103) eine erste Montageschnittstelle (101) aufweist, und/oder an dem Heckabschnitt (107) eine zweite Montageschnittstelle (111) aufweist,
wobei mittels der Montageschnittstelle (101, 111) ein System (1) zur Weidezaunhandhabung nach einem der Ansprüche 1 bis 11 angebracht ist.

13. Vorrichtung (3) zum fahrzeuggestützten Abrollen von Zaundrähten (13), insbesondere von elektrischen Drähten eines Weidezauns, für ein System (1) nach einem der Ansprüche 1 bis 11 oder ein Fahrzeug (100) nach Anspruch 12,
**dadurch gekennzeichnet, dass** die Abrollvorrichtung (3) gemäß einem der Ansprüche 2 bis 6 ausgebildet ist.

14. Vorrichtung (50) zum fahrzeuggestützten Aufrollen von Zaundrähten (13), insbesondere von elektrischen Drähten eines Weidezauns, für ein System (1) nach einem der Ansprüche 1 bis 11 oder ein Fahrzeug (100) nach Anspruch 12,
**dadurch gekennzeichnet, dass** die Aufrollvorrichtung (50) gemäß einem der Ansprüche 7 bis 11 ausgebildet ist.

15. Zaunpfosten (200) für einen Weidezaun,
der dazu eingerichtet ist, insbesondere mit einem System (1) nach einem der Ansprüche 1 bis 11, reversibel lösbar an einer Anzahl von Zaundrähten (13) angebracht zu werden, der sich entlang einer Pfostenlängsrichtung erstreckt, ein erstes Ende (202) mit einer oder mehreren Spitzen (207) zum Verankern des Pfostens (200) im Erdreich, ein gegenüberliegendes zweites Ende (204), und
einer Anzahl von Drahtösen (201) aufweist, die jeweils eine in dieselbe Richtung eines der beiden Enden (202, 204) weisende Einführöffnung zum Einführen des Zaundrahts (13) in das Innere der Drahtöse (201) aufweisen,
**dadurch gekennzeichnet, dass** der Pfosten (200) an demjenigen Ende (202, 204), in dessen Richtung die Einführöffnungen weisen, einen ösenfreien Führungsabschnitt (205) aufweist, der dazu eingerichtet ist, an einem äußersten Zaundraht (13) einer Anzahl von in einer Ebene geführten Zaundrähten (13) seitlich angelegt und in der Pfostenlängsrichtung an dem Zaundraht (13) entlang bewegt zu werden, um die Anzahl Zaundrähte (13) in das Innere der Öse (201) einzuführen oder aus dem Inneren der Öse (201) herauszuführen.

16. Zaunpfosten (200) nach Anspruch 15,
**dadurch gekennzeichnet, dass** der Führungsabschnitt (205) eine Länge in Pfostenlängsrichtung in einem Bereich von 5 cm bis 20 cm aufweist, vorzugsweise in einem Bereich von 8 cm bis 15 cm.

17. Zaunpfosten (200) nach Anspruch 15 oder 16,
**dadurch gekennzeichnet, dass** der Pfosten (200) mehrere Isolatorelemente (203) aufweist, wobei die Isolatorelemente (203) jeweils einen Grundkörper aufweisen, an dem die Drahtösen (201) ausgebildet sind, vorzugsweise angeformt sind.

18. Zaunpfosten (200) nach einem der Ansprüche 15 bis 17,
**dadurch gekennzeichnet, dass** die Drahtösen (201) als Twist-and-Lock-Ösen ausgeführt sind,
wobei die jeweilige Drahtöse (201) ein erstes Ende am Grundkörper, ein von dem Grundkörper beabstandetes zweites Ende, und zwischen den beiden Enden einen sich quer zur Pfostenlängsrichtung erstreckenden, Bogenabschnitt (213) aufweist,
wobei die Einführöffnung als Schlitz ausgebildet ist, welcher zwischen dem Grundkörper und der Drahtöse (201) entlang verläuft und auf einer ersten Seite von dem Bogenabschnitt (213) begrenzt wird, und
wobei der Schlitz in einer ersten Drehstellung, des Zaunpfostens (200), nämlich der Freigabestellung (F), parallel zum Zaundraht (13) ausgerichtet ist, und in einer zweiten Drehstellung, nämlich der Verriegelungsstellung (V), quer zum Zaundraht (13) ausgerichtet ist.

19. Zaunpfosten (200) nach Anspruch 18,
**dadurch gekennzeichnet, dass** der Grundkörper einen Vorsprung (217) aufweist, der sich im Wesentlichen parallel zu dem Bogenabschnitt (213) erstreckt und den Schlitz auf einer gegenüberliegenden zweiten Seite begrenzt.

20. Zaunpfosten (200) nach Anspruch 18 oder 19,
**dadurch gekennzeichnet, dass** der Grundkörper gegenüber dem Bogenabschnitt (213) eine Drahtführungsmulde (221) aufweist, wobei die Drahtführungsmulde (221) vorzugsweise als konische oder konkave Verjüngung in der Querrichtung ausgebildet ist.

21. Zaunpfosten (200) nach einem der Ansprüche 17 bis 20,
**dadurch gekennzeichnet, dass** der Zaunpfosten (200) mehrere voneinander beabstandete Montageabschnitte (209) für die Isolatorelemente (203) aufweist, wobei die Isolatorelemente (203) reversibel lösbar an jeweils einem der Montageabschnitte (209) angebracht sind.

22. Zaunpfosten (200) nach Anspruch 21,
**dadurch gekennzeichnet, dass** die Montageabschnitte (209) identisch ausgebildet und ausgerichtet sind, derart, dass alle Isolatorelemente (203) mit parallel ausgerichteten Einführöffnungen an dem Zaunpfosten (200) angebracht sind.

23. Zaunpfosten (200) nach Anspruch 21 oder 22,
**dadurch gekennzeichnet, dass** jeweils benachbarte Montageabschnitte (209)
- einen (ersten) Abstand zueinander in einem Bereich von 4 cm bis 7 cm, insbesondere 5 cm; und/oder
- einen (zweiten) Abstand zueinander in einem Bereich von 8 bis 12 cm, insbesondere 10 cm, aufweisen; und/oder
- einen(dritten) Abstand zueinander in einem Bereich von 17 bis 23 cm, insbesondere 20 cm.

24. Zaunpfosten (200) nach einem der Ansprüche 21 bis 23,
**dadurch gekennzeichnet, dass** die Anzahl Montageabschnitte (209) 4 oder mehr beträgt, vorzugsweise 6 oder mehr, besonders bevorzugt 10 oder mehr.
